# FASCICULE DE BREVET EUROPEEN

(11) **EP 2 504 212 B1**
(45) Date de publication et mention de la délivrance du brevet: **10.07.2013**
(21) Numéro de dépôt: 10787833.2
(22) Date de dépôt: 22.10.2010
(51) Int. Cl.: B60W 10/06, B60W 10/08, B60W 20/00, B60W 30/18

(54) **PROCEDE D'AUGMENTATION DE LA CHARGE D'UN MOTEUR THERMIQUE**
VERFAHREN ZUR ERHÖHUNG DER LAST EINES WÄRMEMOTORS
METHOD FOR INCREASING THE LOAD OF A HEAT ENGINE

(30) Priorité: 23.11.2009 FR 0958255
(43) Date de publication de la demande: 03.10.2012
(73) Titulaire: Peugeot Citroën Automobiles SA, 78140 Vélizy Villacoublay (FR)
(72) Inventeur: COLIGNON, Christophe, F-95110 Sannois (FR); LE GAC, Rodolphe, F-92110 Clichy (FR)
(74) Mandataire: Laurin, Ghislain Nicolas
(86) Numéro de dépôt international: PCT/FR2010/052264
(87) Numéro de publication internationale: WO 2011/061427

(56) Documents cités:
- DE-A1-102008 035 451
- FR-A1- 2 810 369
- FR-A1- 2 919 665
- US-A1- 2007 204 601

## Description

L'invention porte sur le domaine de l'augmentation de la charge des moteurs thermiques, dans le but d'en augmenter la température des gaz d'échappement. Plus précisément, elle porte sur les procédés et moyens d'élever la température des gaz d'échappement d'un moteur thermique pour permettre la régénération d'un moyen de post-traitement des gaz d'échappement, tel qu'un filtre à particules, voir

US 2007/0204 601A ou DE 10 2008 035 451A.

Un moteur à combustion interne produit lors de son fonctionnement des gaz d'échappement issus de la combustion du carburant, et contenant un certain nombre de polluants réglementés. Les polluants issus de la combustion d'un moteur peuvent notamment comprendre des particules solides carbonées. A défaut de pouvoir calibrer le moteur afin qu'il ne rejette qu'une quantité de polluants réglementés admissible, les gaz d'échappement doivent subir un traitement afin de réduire ces polluants à un niveau inférieur aux seuils normalisés.

Le moyen de traitement des gaz est généralement situé dans le circuit d'échappement du moteur. On parle alors de post-traitement des gaz. Ce moyen de traitement peut être constitué d'un ou plusieurs éléments, et peut notamment comporter un filtre à particules.

Un filtre à particules automobile permet d'éliminer par filtration les particules solides présentes dans les gaz d'échappement des moteurs, généralement Diesel. Une fois piégées au sein du filtre, les particules doivent être éliminées périodiquement par élévation de la température au sein du filtre afin d'entraîner leur combustion. La température dans le filtre doit alors atteindre de 450 à 700°C pour déclencher l'oxydation des suies, selon qu'un additif catalytique est prévu ou non afin de diminuer la température d'oxydation des suies. Cette opération est couramment appelée « régénération » du filtre à particules. Classiquement, l'énergie nécessaire à la régénération est fournie par une élévation pilotée de la température des gaz d'échappement.

Divers moyens peuvent être mis en oeuvre pour augmenter la température des gaz d'échappement. Notamment, une augmentation de la charge du moteur permet l'échauffement des gaz, en combinaison avec l'utilisation de post-injections, c'est-à-dire d'injections de carburant tardives, après le point mort haut du cycle, ou avec une dégradation du rendement de la combustion

Il est connu d'augmenter la charge du moteur par la mise en fonctionnement d'un certain nombre de consommateurs électriques du véhicules. L'énergie électrique employée pour le fonctionnement des consommateurs destinés à augmenter la charge du moteur est ainsi quasiment perdue, en ce qu'elle n'est employée que pour augmenter la température des gaz d'échappement. Par ailleurs, le surcroît de charge moteur obtenu par l'activation des consommateurs électriques est limité en puissance. Il n'est également pas toujours possible (dépend du bilan électrique du réseau de bord du véhicule).

On connait par ailleurs dans l'art antérieur le brevet français FR2805222 qui présente un système de commande d'un véhicule hybride électrique dont la motorisation thermique est dotée d'un filtre à particules, permettant la régénération de ce dernier en déchargeant dans un premier temps le stockeur électrique du véhicule puis, en passant en mode de traction thermique, en augmentant la charge du moteur thermique par la recharge du stockeur électrique.

Si l'augmentation de la charge du moteur constitue ainsi un moyen connu pour augmenter la température des gaz d'échappement, les stratégies d'augmentation de la charge du moteur développées dans l'état de la technique ne sont pas optimales pour favoriser la régénération du filtre à particules.

L'invention vise à optimiser l'effet sur l'efficacité de la régénération d'un filtre à particules de l'augmentation de charge du moteur thermique par la recharge d'un stockeur électrique. Pour cela, on privilégie une recharge progressive du stockeur

Plus précisément l'invention porte sur un procédé d'augmentation de la charge d'un moteur thermique par recharge d'un stockeur électrique, et comportant les étapes de :
- détermination de la quantité d'énergie stockable dans le stockeur électrique ;
- détermination de la puissance à fournir au stockeur pour lui fournir la quantité d'énergie stockable en une durée de référence prédéterminée ;
- comparaison entre la puissance à fournir et une puissance minimale prédéfinie ;
- recharge du stockeur par :
   a. soit la fourniture au stockeur de la puissance à fournir pendant la durée de référence si la puissance à fournir est supérieure ou égale à la puissance minimale ;
   b. soit la fourniture au stockeur de la puissance minimale pendant une durée permettant d'assurer la recharge complète du stockeur si la puissance à fournir est inférieure à la puissance minimale.

On peut ainsi par exemple augmenter la température en entrée d'un filtre à particules équipant le moteur, lors d'une phase de régénération du filtre, en chargeant le moteur thermique grâce à une recharge progressive du stockeur électrique, cette recharge étant dépendante de son état de charge. Cela génère un gain en durée de régénération, et une meilleure efficacité énergétique, car le procédé développé n'engendre pas d'utilisation de moyens électriques en pure perte. Sans consommer d'énergie électrique en pure perte (du fait de la recharge d'un stockeur électrique), le procédé développé permet d'atteindre prioritairement une durée minimale d'aide à la régénération du filtre par augmentation de la charge du moteur.

On pourrait penser, vu l'art antérieur connu, qu'une stratégie consistant à recharger un stockeur avec le maximum de puissance est ce qu'il y a de plus efficace, mais ce n'est pas le cas car une recharge très intense mais très courte sera inefficace du fait de l'inertie thermique de la ligne d'échappement. Il faut donc une durée minimale de chargement de la batterie, ou durée de référence, pour que ce surcroît de charge moteur ait un effet significatif sur la température des gaz en entrée du filtre à particule, ce que le procédé développé dans l'invention permet.

S'il faut que l'augmentation de la charge du moteur thermique ait idéalement une durée minimum, il faut néanmoins que cette augmentation de charge du moteur soit suffisamment importante pour avoir un effet significatif sur la température des gaz d'échappement en sortie du moteur. C'est ce que permet le procédé développé, y compris dans le cas où le stockeur électrique ne présente pas une énergie stockable suffisante pour accepter une recharge au moins à la puissance minimale pendant la durée minimale (durée de référence).

Dans l'invention, si la puissance à fournir est inférieure à la puissance minimale, on détermine la durée permettant d'assurer la recharge complète du stockeur électrique comme le rapport entre la quantité d'énergie stockable et la puissance minimale. Ainsi, même si on ne peut pas obtenir une augmentation de la charge du moteur suffisante pendant la durée de référence requise, on optimise néanmoins l'effet de la recharge du stockeur électrique sur l'échauffement des gaz d'échappement, en fonction de l'état de charge du stockeur électrique.

En d'autres termes, dans l'invention la priorité est mise sur le respect d'une durée minimale de l'assistance à la régénération du filtre à particules en augmentant la charge du moteur thermique par recharge d'un stockeur électrique, par exemple une batterie. Ceci permet une régénération du filtre efficace, plus particulièrement lors des roulages à très faible vitesse pendant lesquels le catalyseur d'oxydation peut facilement se désamorcer. Lorsque l'énergie stockable par le stockeur électrique et utilisable pour charger le moteur est insuffisante pour garantir une recharge batterie d'une durée suffisante, on continue de privilégier la montée en température progressive de la ligne plutôt que la charge maximale pendant une durée très faible.

Dans une variante de l'invention, on prend en compte la consommation électrique instantanée appliquée au stockeur par des consommateurs électriques pour déterminer la quantité d'énergie stockable après écoulement de la durée de référence. Ainsi, il est possible, en se basant sur la consommation instantanée de consommateurs électriques d'optimiser encore plus le procédé développé, car la quantité d'énergie stockable sera maximisée par la prise en compte de l'électricité consommée pendant la régénération. Il est possible de sélectionner les consommateurs dont on tient compte, et ceux dont on ne tient pas compte.

De préférence, la durée de référence est comprise entre 120 et 180 secondes. C'est la durée nécessaire pour que l'augmentation de la charge du moteur ait un effet significatif sur la température des gaz d'échappement à l'entrée d'un moyen de post traitement tel un filtre à particules, situé dans la ligne d'échappement d'un moteur à combustion équipant un véhicule automobile.

De préférence, la puissance minimale est comprise entre 1 et 2 kW. C'est la puissance minimale pour que l'augmentation de la charge du moteur ait un effet significatif sur la température des gaz d'échappement à l'entrée d'un moyen de post traitement tel un filtre à particules, situé dans la ligne d'échappement d'un moteur à combustion équipant un véhicule automobile.

L'invention porte également sur un procédé de régénération d'un filtre à particules équipant un moteur thermique, dans lequel on met en oeuvre un procédé d'augmentation de la charge du moteur thermique tel que précédemment décrit, si la charge dudit moteur est inférieure à un seuil prédéfini lorsqu'une régénération du filtre doit être déclenchée.

De préférence, dans une variante de l'invention appliquée à un véhicule hybride comportant une machine électrique de traction, si la machine électrique de traction est actionnée pendant la régénération du filtre à particules, on met en jeu le procédé d'augmentation de la charge après arrêt de ladite machine électrique. Ceci permet de tenir compte de la consommation électrique, généralement importante, de la machine électrique pendant son fonctionnement. En lançant (ou en relançant) le procédé après l'arrêt de la machine, on redéfinit de manière optimale l'augmentation de charge que l'on applique au moteur thermique, en fonction du nouvel état de charge du stockeur électrique.

Dans une variante, on met périodiquement en oeuvre le procédé d'augmentation de la charge du moteur. Cela permet de prendre en compte une décharge du stockeur électrique pendant la régénération du filtre, par exemple du fait de l'emploi d'une machine électrique de traction dans une application automobile hybride électrique.

L'invention porte également sur un véhicule automobile hybride électrique comportant un moteur à combustion doté d'un filtre à particules et d'un système de contrôle moteur comportant des moyens de mise en oeuvre d'un procédé d'augmentation de la charge d'un moteur thermique ou de régénération d'un filtre à particules, tel que précédemment décrit. Dans cette application, la mise en oeuvre du procédé par des moyens adaptés, par exemple une modification du calculateur moteur et du coordinateur du groupe motopropulseur, permet de recharger un stockeur électrique, ce qui peut générer un gain en consommation après la régénération du filtre à particules (et donc un gain de consommation globale), mais également un gain en dilution de gazole dans l'huile du fait d'une régénération avec un moteur plus chargé, et permet une meilleure régénération du filtre à particules.

L'invention est décrite ci après à l'aide de la figure unique présentant le synoptique d'un procédé selon l'une des variantes de l'invention.

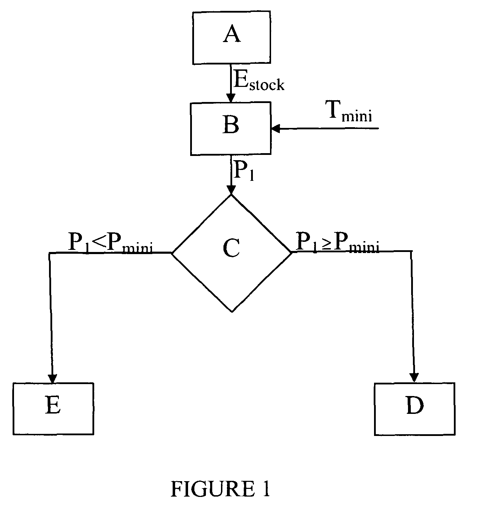

La figure 1 présente un synoptique d'un procédé conforme à une variante de l'invention.

Dans une première étape A, on détermine la quantité d'énergie stockable E_{stock} dans le stockeur électrique. Il s'agit de la quantité d'énergie à apporter au stockeur électrique pour en assurer une recharge complète. Cette quantité d'énergie stockable 1 dépend du niveau de charge du stockeur au moment de la détermination, mais peut également dépendre de facteurs environnementaux tels que la température extérieure ou la température interne du stockeur.

Dans une deuxième étape B, on détermine la puissance à fournir P₁ au stockeur pour lui fournir la quantité d'énergie stockable E_{stock} en une durée de référence Tₘᵢₙᵢ prédéterminée.

Dans une étape de comparaison C, on compare la puissance à fournir P₁ et d'une puissance minimale Pₘᵢₙᵢ prédéfinie.

Pₘᵢₙᵢ et Tₘᵢₙᵢ sont des valeurs qui peuvent être définie dans un dispositif de contrôle moteur, et peuvent être adaptées en fonction de l'application considérée (position du filtre à particules par rapport au moteur, longueur de la ligne d'échappement, etc.). Dans une application automobile classique, la durée Tₘᵢₙᵢ, nécessaire à ce que l'augmentation de la charge du moteur ait un effet significatif sur la température des gaz à l'entrée du filtre à particules du fait de l'inertie thermique à l'échappement est de l'ordre de 120 à 180 secondes.

Si la puissance à fournir P₁ est supérieure ou égale à la puissance minimale Pₘᵢₙᵢ on fournit au stockeur la puissance à fournir P₁ pendant la durée de référence Tₘᵢₙᵢ dans une étape d'augmentation de la charge du moteur thermique D;

Si la puissance à fournir P₁ est inférieure à la puissance minimale, on fournit au stockeur la puissance minimale Pₘᵢₙᵢ pendant une durée permettant d'assurer la recharge complète du stockeur, dans une étape d'augmentation a minima de la charge du moteur thermique E.

Le procédé ainsi développé permet une augmentation optimale de la charge du moteur afin de favoriser autant que possible la montée en température des gaz d'échappement du moteur, sans toutefois entrainer l'emploi d'énergie électrique en pure perte. Il est tout particulièrement remarquable en ce qu'il prend en compte l'inertie thermique à l'échappement en favorisant autant que possible le respect d'une durée minimale d'augmentation de charge du moteur. Le procédé développé est applicable à tout véhicule doté d'un filtre à particules ou de tout autre dispositif nécessitant l'augmentation périodique de la charge du moteur ou de la température des gaz d'échappement. Il trouve son application préférentielle dans les véhicules hybrides électriques, qui présentent des moyens de stockages d'électricité de forte capacité (par exemple des batteries, dédiées ou non à la traction du véhicule, des supercapacités, etc.).

## Revendications

1. Procédé d'augmentation de la charge d'un moteur thermique par recharge d'un stockeur électrique, **caractérisé par** les étapes de :
• détermination de la quantité d'énergie stockable (E_{stock}) dans le stockeur électrique ;
• détermination de la puissance à fournir (P₁) au stockeur pour lui fournir la quantité d'énergie stockable en une durée de référence prédéterminée ;
• comparaison (C) entre la puissance à fournir (P₁) et une puissance minimale (Pₘᵢₙᵢ) prédéfinie ;
• recharge du stockeur par :
a. soit la fourniture au stockeur de la puissance à fournir (P₁) pendant la durée de référence (Tₘᵢₙᵢ) si la puissance à fournir (P₁) est supérieure ou égale à la puissance minimale (Pₘᵢₙᵢ) ;
b. soit la fourniture au stockeur de la puissance minimale (Pₘᵢₙᵢ) pendant une durée permettant d'assurer la recharge complète du stockeur si la puissance à fournir (P₁) est inférieure à la puissance minimale (Pₘᵢₙᵢ).

2. Procédé selon la revendication 1, **caractérisé en ce que**, si la puissance à fournir (P₁) est inférieure à la puissance minimale (Pₘᵢₙᵢ), on détermine la durée permettant d'assurer la recharge complète du stockeur électrique comme le rapport entre la quantité d'énergie stockable (E_{stock}) et la puissance minimale (Pₘᵢₙᵢ).

3. Procédé selon la revendication 1 ou la revendication 2, **caractérisé en ce qu'**on prend en compte la consommation électrique instantanée appliquée au stockeur par des consommateurs électriques pour déterminer la quantité d'énergie stockable (E_{stock}) après écoulement de la durée de référence (Tₘᵢₙᵢ).

4. Procédé selon l'une quelconque des revendications précédentes, **caractérisé en ce que** la durée de référence (Tₘᵢₙᵢ) est comprise entre 120 et 180 secondes.

5. Procédé selon l'une quelconque des revendications précédentes, caractérisé en que la puissance minimale (Pₘᵢₙᵢ) est comprise entre 1 et 2 kW.

6. Procédé de régénération d'un filtre à particules équipant un moteur thermique, **caractérisé en ce qu'**on met en oeuvre un procédé d'augmentation de la charge du moteur thermique selon l'une quelconque des revendications précédentes si la charge dudit moteur est inférieure à un seuil prédéfini lorsqu'une régénération du filtre doit être déclenchée.

7. Procédé de régénération d'un filtre à particules selon la revendication 6 appliqué à un véhicule hybride comportant une machine électrique de traction, **caractérisé en ce que**, si la machine électrique de traction est actionnée pendant la régénération du filtre à particules, on met en jeu le procédé d'augmentation de la charge après arrêt de ladite machine électrique.

8. Procédé de régénération d'un filtre à particules selon la revendication 6 ou la revendication 7, **caractérisé en ce qu'**on met périodiquement en oeuvre le procédé d'augmentation de la charge du moteur.

9. Véhicule automobile hybride électrique comportant un moteur à combustion doté d'un filtre à particules et d'un système de contrôle moteur comportant des moyens de mise en oeuvre d'un procédé selon l'une quelconque des revendications précédentes.

## Patentansprüche

1. Verfahren zur Erhöhung der Last eines Wärmemotors durch Aufladen eines elektrischen Speichers, **gekennzeichnet durch** die folgenden Schritte:
• Bestimmen der in dem elektrischen Speicher speicherbaren Energiemenge (E_{stock}),
• Bestimmen der Leistung (P₁), die dem Speicher zu liefern ist, um ihm die Energiemenge zu liefern, die in einer vorbestimmten Bezugsdauer speicherbar ist,
• Vergleichen (C) der zu liefernden Leistung (P₁) und einer vordefinierten Mindestleistung (Pₘᵢₙᵢ),
• Aufladen des Speichers **durch**:
a. entweder die Lieferung an den Speicher der zu liefernden Leistung (P₁) während der Bezugsdauer (Tₘᵢₙᵢ), wenn die zu liefernde Leistung (P₁) größer oder gleich der Mindestleistung (Pₘᵢₙᵢ) ist,
b. oder die Lieferung an den Speicher der Mindestleistung (Pₘᵢₙᵢ) während einer Dauer, die es erlaubt, das komplette Aufladen des Speichers sicherzustellen, wenn die zu liefernde Leistung (P₁) kleiner ist als die Mindestleistung (Pₘᵢₙᵢ).

2. Verfahren nach Anspruch 1, **dadurch gekennzeichnet, dass** man, wenn die zu liefernde Leistung (P₁) kleiner ist als die Mindestleistung (Pₘᵢₙᵢ), die Dauer, die es erlaubt, das vollständige Aufladen des elektrischen Speichers sicherzustellen, als das Verhältnis zwischen der speicherbaren Energiemenge (E_{stock}) und der Mindestleistung (Pₘᵢₙᵢ) bestimmt.

3. Verfahren nach Anspruch 1 oder Anspruch 2, **dadurch gekennzeichnet, dass** man den Momentanstromverbrauch berücksichtigt, der an den Speicher von den elektrischen Verbrauchern angelegt wird, um die speicherbare Energiemenge (E_{stock}) nach Verstreichen der Bezugsdauer (Tₘᵢₙᵢ) zu bestimmen.

4. Verfahren nach einem der vorhergehenden Ansprüche, **dadurch gekennzeichnet, dass** die Bezugsdauer (Tₘᵢₙᵢ) zwischen 120 und 180 Sekunden liegt.

5. Verfahren nach einem der vorhergehenden Ansprüche, **dadurch gekennzeichnet, dass** die Mindestleistung (Pₘᵢₙᵢ) zwischen 1 und 2 kW liegt.

6. Verfahren zum Regenerieren eines Partikelfilters, das einen Wärmemotor ausrüstet, **dadurch gekennzeichnet, dass** man ein Verfahren zum Erhöhen der Motorwärmelast gemäß einem der vorhergehenden Ansprüche umsetzt, wenn die Last des Motors kleiner ist als ein vorbestimmter Schwellenwert, wenn eine Regenerierung des Filters ausgelöst werden muss.

7. Verfahren zum Regenerieren eines Partikelfilters nach Anspruch 6, angewandt an ein Hybridfahrzeug, das einen elektrischen Zugmotor aufweist, **dadurch gekennzeichnet, dass** man, wenn der elektrische Zugmotor während der Regenerierung des Partikelfilters aktiviert wird, das Verfahren zum Erhöhen der Last nach dem Stoppen des Elektromotors umsetzt.

8. Verfahren zum Regenerieren eines Partikelfilters nach Anspruch 6 oder Anspruch 7, **dadurch gekennzeichnet, dass** man das Verfahren zum Erhöhen der Last des Motors in regelmäßigen Abständen umsetzt.

9. Elektrisches Hybridkraftfahrzeug, das einen Verbrennungsmotor aufweist, der mit einem Partikelfilter und mit einem System zur Motorsteuerung versehen ist, das Mittel zum Umsetzen eines Verfahrens nach einem der vorhergehenden Ansprüche aufweist.

## Claims

1. A method for increasing the load of a heat engine by means of recharging an electric storage, **characterized by** the steps of:
■ determining the amount of energy (E_{stock}) that can be stored within the electric storage;
■ determining the power (P₁) to be provided to the storage so as to provide said storage with the amount of energy that can be stored within a predetermined reference duration;
■ comparing (C) the power (P₁) to be provided with a predefined minimum power (Pₘᵢₙᵢ);
■ recharging of the storage by either:
a. providing the power (P₁) to be provided to the storage during the reference duration (Tₘᵢₙᵢ) if the power (P₁) to be provided is greater than or equal to the minimum power (Pₘᵢₙᵢ) ; or
b. providing the minimum power (Pₘᵢₙᵢ) to the storage during a duration making it possible to ensure complete recharging of the storage if the power (P₁) to be provided is less than the minimum power (Pₘᵢₙᵢ).

2. The method according to Claim 1, **characterized in that** if the power (P₁) to be provided is less than the minimum power (Pₘᵢₙᵢ), the duration is determined permitting the complete recharging of the electric storage to be ensured as the ratio between the amount of energy (E_{stock}) that can be stored and the minimum power (Pₘᵢₙᵢ).

3. The method according to Claim 1 or Claim 2, **characterized in that** the instantaneous electrical consumption is taken into account, applied to the storage by electrical consumers to determine the amount of energy (E_{stock}) that can be stored after the reference duration (Tₘᵢₙᵢ) has elapsed.

4. The method according to any one of the preceding claims, **characterized in that** the reference duration (Tₘᵢₙᵢ) is comprised between 120 and 180 seconds.

5. The method according to any one of the preceding claims, **characterized in that** the minimum power (Pₘᵢₙᵢ) is comprised between 1 and 2 kW.

6. A method for regeneration of a particle filter equipping a heat engine, **characterized in that** a method is implemented for increasing the load of the heat engine according to any one of the preceding claims if the load of the said engine is less than a predefined threshold when a regeneration of the filter is to be initiated.

7. The method for regeneration of a particle filter according to Claim 6 applied to a hybrid vehicle comprising an electric traction machine, **characterized in that** if the electric traction machine is actuated during the regeneration of the particle filter, the method for increasing the load is brought into play after the stopping of the said electric machine.

8. The method for regeneration of a particle filter according to Claim 6 or Claim 7, **characterized in that** the method for increasing the load of the engine is implemented periodically.

9. A hybrid electric motor vehicle comprising a combustion engine equipped with a particle filter and an engine control system comprising means for implementing a method according to any one of the preceding claims.
